# EUROPÄISCHE PATENTSCHRIFT

(11) **EP 3 222 498 B1**
(45) Veröffentlichungstag und Bekanntmachung des Hinweises auf die Patenterteilung: **04.03.2020**
(21) Anmeldenummer: 17151116.5
(22) Anmeldetag: 12.01.2017
(51) Int. Cl.: B62D 21/17, B62D 21/18, B60P 3/16, F16L 3/26, B28C 5/42

(54) **FAHRMISCHER**
MIXER TRUCK
BÉTONNIÈRE

(30) Priorität: 21.03.2016 DE 202016001858 U
(43) Veröffentlichungstag der Anmeldung: 27.09.2017
(73) Patentinhaber: Liebherr-Mischtechnik GmbH, 88427 Bad Schussenried (DE)
(72) Erfinder: Wittig, Martin, 88400 Biberach (DE)
(74) Vertreter: Laufhütte, Dieter

(56) Entgegenhaltungen:
- EP-A1- 1 253 067
- EP-A2- 0 184 931
- DE-A1- 3 004 090
- DE-A1- 10 307 634
- DE-A1- 19 611 933
- DE-A1-102015 004 299
- DE-C1- 19 922 323
- DE-U1- 29 709 165
- JP-A- 2013 244 635
- US-A1- 2004 256 836
- US-A1- 2006 151 229
- US-A1- 2015 367 300
- US-B1- 6 270 150

## Beschreibung

Die Erfindung betrifft einen Fahrmischer mit einem Fahrgestell und einem Mischeraufbau, der die Mischtrommel aufnimmt.

Es gibt Fahrmischer in verschiedenen Baugrößen, die auf unterschiedliche Modelle und Varianten von LKW-Fahrgestellen diverser Hersteller aufgebaut werden. Demzufolge muss für jeden Aufbau die passende Aufbauposition untersucht werden, um eine optimale Achsauslastung im technischen und gesetzlichen Rahmen sicherzustellen. Aus dieser Untersuchung resultiert dann die Gestaltung des Mischerhilfsrahmens, der der Kontur des Fahrgestellrahmens angepasst ist und demnach als eine Art Adapter dient. Der Mischerhilfsrahmen kann dann auf dem Fahrgestell montiert werden und den Mischeraufbau aufnehmen.

An diesen Hilfsrahmen können vorab auch Halter für Anbauteile, wie beispielsweise Kotflügel, seitliche Schutzvorrichtungen, Halterungen für Leitungen und Abdeckungen, angebaut sein. Zusätzlich zur Aufbauposition haben auch Anbauteile des LKW-Fahrgestells einen Einfluss auf die Positionierung dieser Teile. Zum Beispiel unterscheiden sich die Fahrgestelle in Anzahl und Abstand der Achsen. All dies führt zu einer deutlichen Erhöhung des Aufwands bei der Planung jedes Fahrmischeraufbaus.
Die Verlegung von Versorgungsleitungen erfolgt teilweise im Rahmen des Fahrgestells, weshalb die Leitungslängen individuell für jeden Aufbau festzulegen sind. Auch sind die verlegten Leitungen dadurch Verschmutzungen ausgesetzt. Gemäß einzuhaltenden Beleuchtungsrichtlinien muss seitlich am Fahrzeug eine reflektierende Markierung angebracht sein, die mindestens 80% der Fahrzeuglänge abdeckt. Allerdings verfügt der konventionelle Fahrmischeraufbau keine über die Fahrzeuglänge durchgehende geschlossene Fläche. Dies bedeutet zusätzlichen Aufwand, um die gesetzlichen Vorgaben einzuhalten.
Dieselbe Richtlinie schreibt auch die maximalen Abstände für seitliche Markierungsleuchten vor. Zur Erfüllung der Richtlinien müssen regelmäßig individuell angepasste Halter erstellt und verbaut werden. Auch wird oftmals vom Bediener selbst gewünscht, weitere Anbauteile am Fahrzeug montieren zu können. Dazu zählen Halterungen für die Verlängerungsschurren, Zusatzmittelbehälter, Staukästen, Halterungen für Werkzeuge, etc. Diese Teile werden üblicherweise am Kotflügel montiert. Reicht hier der vorhandene Platz nicht aus, müssen zusätzliche Halterungen an dem Hilfsrahmen vorgesehen werden.
Bei der Planung jedes Fahrmischeraufbaus entsteht aufgrund der vorgenannten Umstände ein erheblicher Zeitaufwand. Bei Aufbauten mit vielen Anbauteilen entstehen zudem hohe Zusatzkosten durch speziell ausgestaltete Halter, was den Planungs- und Fertigungsaufwand zusätzlich erhöht. Auch das Einhalten der gesetzlichen Vorschriften ist mit hohen Kosten verbunden. Das Dokument US 2015/367300 zeigt hier einen Fahrmischer mit einem Fahrgestell und einem Mischeraufbau, der die Mischtrommel trägt, wobei wenigstens ein Profil vorgesehen ist, das sich in Längsrichtung des Fahrmischers erstreckt und zur Aufnahme ein oder mehrerer Komponenten des Fahrmischers dient. Die Aufgabe der vorliegenden Erfindung besteht darin, ein alternatives Konzept für die Gestaltung eines Fahrmischers aufzuzeigen, das die oben genannten Probleme zu überwinden weiß.

Gelöst wird diese Aufgabe durch einen Fahrmischer mit den Merkmalen des Anspruchs 1. Vorteilhafte Ausgestaltungen des Fahrmischers sind Gegenstand der sich an den Hauptanspruch anschließenden abhängigen Ansprüche.

Gemäß Anspruch 1 wird ein Fahrmischer vorgeschlagen, der ein Fahrgestell, insbesondere ein LKW-Fahrgestell, aufweist. Auf dem Fahrgestell ist ein Mischeraufbau installiert. Der Mischeraufbau umfasst notwendige Komponenten für die Lagerung und Betrieb der Mischtrommel sowie die Mischtrommel selbst.

Erfindungsgemäß wird vorgeschlagen, den Fahrmischer mit wenigstens einem Profil auszustatten, das sich in Längsrichtung des Fahrmischers erstreckt und zur Aufnahme ein oder mehrerer Komponenten des Fahrmischers dient. Es wird damit ein sogenannter integraler Geräteträger für die Befestigung ein oder mehrere Anbauteile eingesetzt. Idealerweise sind wenigstens zwei Profile vorgesehen, die sich vorzugsweise jeweils im Bereich der Seitenkanten des Fahrmischers in Längsrichtung erstrecken.

Idealerweise erstrecken sich das oder die Profile über die gesamte Fahrzeuglänge, zumindest jedoch über einen Großteil der Fahrzeuglänge, beispielsweise vom Fahrzeugheck bis hinter die Fahrerkabine des Fahrwerks. Vorstellbar ist es ebenso, dass sich ein Profil aus mehreren Teilprofilen zusammensetzt, die entweder fluchtend oder versetzt zueinander in Längsrichtung auf einer Fahrzeugseite angebracht sind.

Das verwendete Profil kann am Fahrgestell des Fahrmischers und/oder am Mischeraufbau montiert sein. Dadurch ergibt sich eine äußerst flexible und universelle Verwendungsmöglichkeit des Profils unabhängig vom jeweiligen Fahrmischertyp.

Gemäß einer bevorzugten Ausführungsform ist das erfindungsgemäße Profil mit ein oder mehreren Hohlkammern ausgestattet, die ein oder mehrere in Fahrzeuglängsrichtung bzw. in Profilrichtung verlaufende Kanäle ausbilden. Die ausgebildeten Kanäle dienen zur Aufnahme ein oder mehrerer Versorgungsleitungen des Fahrmischers. Insbesondere können innerhalb der Hohlkammern des Profils Versorgungsleitungen für Wasser und/oder die Elektrik und/oder die Hydraulik oder/und eine Pneumatik des Fahrmischers verlegt sein. Beispielsweise können ein oder mehrere Leitungen von den Anschlusspunkten vorne am Mischer zu einer Bedienstellen am Fahrzeugheck verlegt sein. Die Verwendung von Profilen als Kabelführung lässt einen unkomplizierten und flexiblen Kabelverlauf zu. Anders als im Stand der Technik müssen die Versorgungsleitungen nicht an die individuellen Maße des jeweiligen Fahrwerkrahmens angepasst sein. Ferner sind keine zusätzlichen Halterungen innerhalb des Profils zwingend notwendig, da sich die Leitungen lose aber dennoch geschützt in den Hohlkammer verlegen lassen.

Denkbar ist es, dass das Profil ein oder mehrere Nuten, insbesondere Längsnuten, aufweist. Die ein oder mehreren Nuten erstrecken sich idealerweise über die gesamte Profillänge bzw. zumindest über längere Abschnitte des Gesamtprofils. Die im Profil, vorzugsweise auf der Profilunterseite ausgeformten Nuten dienen zur flexiblen Befestigung ein oder mehrerer Anbauteile, bevorzugt mittels an den Anbauteilen ausgeprägter Nutsteine oder ähnlicher Befestigungselemente. Die Längsnuten des Profils erlauben eine Montage von Anbauteilen in beliebiger Position über die gesamte Länge der Nut bzw. des Profils, folglich des gesamten Fahrmischers.

Denkbar ist es, dass sich als Anbauteile ein Kotflügel und/oder seitliche Markierungsleuchten und/oder seitliche Schutzvorrichtungen und/oder Schurrenhalterungen montiert sind bzw. anbringen lassen. Derartige Anbauteile sind mit entsprechenden Nutsteinen oder ähnlichen Befestigungselementen ausgestattet, wodurch diese in beliebiger Position über die gesamte Länge des Profils anbringbar oder angebracht sind. Die gewünschte Position kann unmittelbar während der Montage am Fahrzeug festgelegt werden und bedarf folglich keiner Vorabplanung, insbesondere bei der Planung und Konstruktion des Mischeraufbaus bzw. des Fahrwerks.

Die Höhe des wenigstens einen Profils ist gemäß einer bevorzugten Variante so gewählt, dass seitlich eine retroreflektierende Markierung gemäß der gesetzlichen Vorgaben für Fahrmischer anbringbar bzw. angebracht ist. Die gesamte Profillänge lässt zudem eine durchgehende Markierung in Längsrichtung des Fahrzeugs zu, insbesondere über 80% der Fahrzeuglänge, wie es durch die gesetzlichen Bestimmungen verlangt wird.

Gemäß einer vorteilhaften Ausgestaltung der Erfindung ist die Profiloberseite ballig oder schrägflächig ausgeführt. Die ballige/gewölbte oder schräge Oberflächenausführung soll dem Anwender signalisieren, dass keine Montage von Anbauteilen zulässig ist, um eine Beschädigung der integralen Hohlkammern des Profils zu vermeiden. Zudem ergibt sich durch die ballige oder schräge Oberflächenstruktur eine schmutzabweisende Eigenschaft, da Flüssigkeiten oder sonstige Verschmutzungen von der Oberfläche ablaufen bzw. abrutschen können.

Weiterhin ist vorgesehen, dass ergänzend zu den die Kanäle bildenden Hohlkammern wenigstens eine Profilkammer mit verstärkter Kammerwandung vorgesehen ist. Diese wenigstens eine zusätzliche Profilkammer soll gezielt der Aufnahme von weiteren Befestigungselementen bzw. Anbauteilen dienen. Die verstärkte Kammerwandung bietet dazu eine ausreichende Montagefläche für eine Verschraubung oder Vernietung derartiger Anbauteile.
Zweckmäßig ist es, die verstärkte Kammerwandung mit einer sichtbaren Markierung für den Benutzer auszugestalten. Als geeignet erweist sich eine rillenartige Markierung, die sich vorzugsweise in Längsrichtung entlang der Profilkammer erstreckt. Diese Längsrille dient nicht nur als Markierung, sondern zudem als Montagehilfe für etwaige Schraub- oder Nietverbindungen.
Das Profil kann beispielsweise aus Stahl oder einem Kunststoff hergestellt sein bzw. ein derartiges Material umfassen. Besonders bevorzugt ist eine Herstellung des Profils als Aluminium-Strangpressprofil.

Das Profil kann wenigstens ein Loslager und/oder ein Festlager umfassen bzw. mittels eines Loslagers und/oder Festlagers am Fahrwerk und/oder Mischeraufbau montiert sein. Die Verwendung eines entsprechenden Lagers dient dazu, während des Mischerbetriebes üblicherweise auftretende thermische Verwindungen und/oder Spannungen innerhalb des Profils auszugleichen.

Neben dem erfindungsgemäßen Fahrmischer betrifft die vorliegende Erfindung zudem ein Profil für einen Fahrmischer. Das Profil ist gemäß den Merkmalen ausgestattet, wie sie bereits anhand des verwendeten Profils bei einem Fahrmischer gemäß der vorliegenden Erfindung erläutert wurden. Es wird dementsprechend vollumfänglich auf die voranstehenden Ausführungen im Hinblick auf die Profilausgestaltung Bezug genommen.

Weitere Vorteile und Eigenschaften der Erfindung sollen im Folgenden anhand eines in den Zeichnungen dargestellten Ausführungsbeispiels näher erläutert werden.

Es zeigen:
- Figur 1:: eine Seitenansicht des erfindungsgemäßen Fahrmischers;
- Figuren 2a, 2b:: eine Schnittdarstellung durch das erfindungsgemäße Profil sowie eine Detailaufnahme des Bereichs Z
- Figur 3:: eine Draufsicht auf das erfindungsgemäße Profil gemäß Figur 2,
- Figur 4:: eine Seitenansicht auf das erfindungsgemäße Profil mit montiertem Kotflügel,
- Figuren 5a, 5b:: eine Vorder- und Rückansicht des Kotflügels und
- Figuren 6a, 6b:: eine Draufsicht auf den Kotflügel sowie eine Schnittdarstellung entlang der Achse B-B.

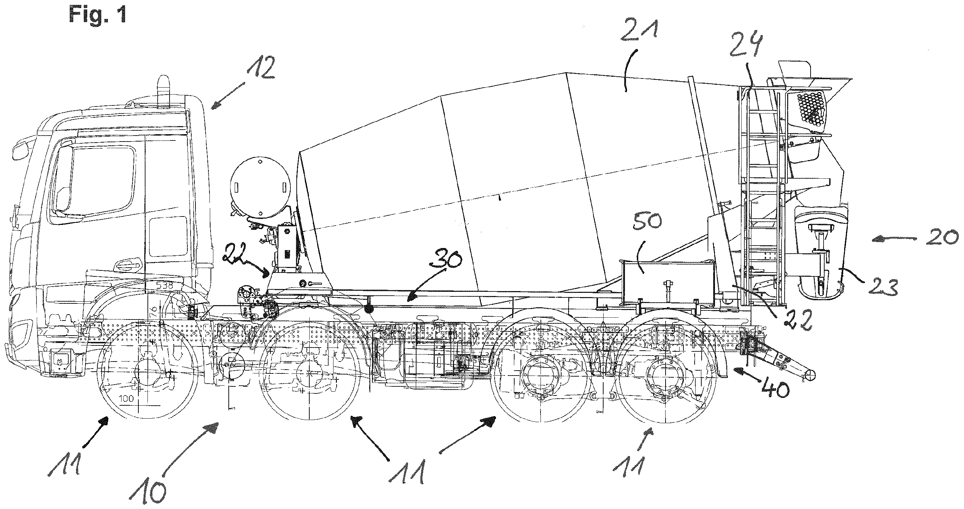

Figur 1 gibt eine Übersicht über den erfindungsgemäßen Fahrmischer, der aus einem LKW-Fahrgestell 10 sowie einem Mischeraufbau 20 besteht. Das LKW-Fahrgestell 10 weist mehrere Fahrachsen 11 sowie eine Fahrerkabine 12 auf. Der Mischeraufbau besteht aus den Trommelböcken 22, die die Mischtrommel 21 drehbar lagern. Weitere Komponenten, wie bspw. die Betonschurre 23 sowie eine Steigleiter 24 sind ebenfalls ersichtlich.

Entlang der Längsachse des Fahrmischers erstreckt sich ein integraler Geräteträger in Form des erfindungsgemäßen Profils 30, wobei insgesamt zwei Profile 30, jeweils eines pro Seitenkante des Fahrgestells 10, vorgesehen sind. Figur 1 zeigt lediglich ein Profil 30, dass an der in Fahrtrichtung gesehen linken Kante des Fahrgestells 11 montiert ist. Erkennbar ist in Figur 1 zudem, dass sich das Profil 30 nahezu über die gesamte Fahrzeuglänge erstreckt, d.h. vom Fahrzeugheck bis knapp hinter die Fahrerkabine 12.

Der integrale Geräteträger bzw. das Profil 30 ist ein Aluminium-Strangpressprofil. Alternativ könnte das gezeigte Profil auch aus Stahl oder Kunststoff gefertigt sein.

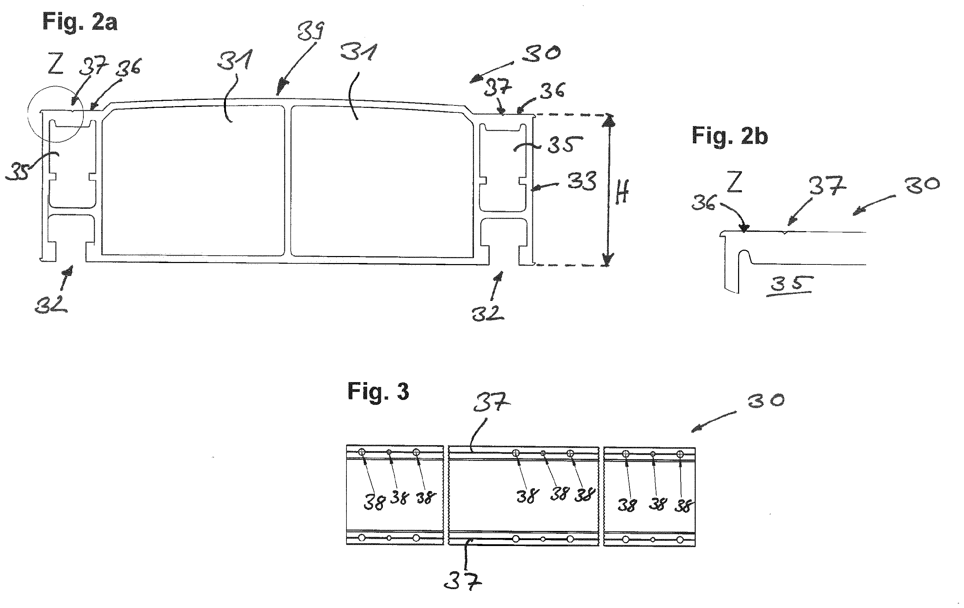

Der konkrete Aufbau des Profils 30 ist den Figuren 2 und 3 zu entnehmen, die einen Querschnitt (Fig. 2a) durch das Profil 30, eine Detailaufnahme des Bereichs Z (Fig. 2b) der Abbildung in Figur 2a und eine Draufsicht auf das Profil 30 (Fig. 3) offenbaren. Das Profil 30 zeichnet sich durch zwei Hohlkammern 31 aus, die sich parallel über die gesamte Profillänge in Richtung der Fahrzeugachse erstrecken. Diese Profilkammern 31 bilden Kanäle für die Verlegung von etwaigen Versorgungsleitungen des Fahrmischers, so zum Beispiel für Wasserleitungen, Elektroleitungen, Hydraulik- oder Pneumatikleitungen. Da die Versorgungsleitungen üblicherweise von der Vorderseite des Fahrgestells, beispielsweise vom Bereich hinter der Fahrerkabine 11, bis zum Fahrzeugheck geführt werden müssen, sind diese lose aber ausreichend geschützt innerhalb der Kanäle 31 verlegt. Am Profilende im Bereich des Fahrzeughecks treten die Leitungen aus dem Profil 30 aus, um bspw. das Bedienpult am Fahrzeugheck anzubinden.

An der Profilunterseite befinden sich auf jeder Seite des Profils 30 Längsnuten 32, die sich ebenfalls über die gesamte Länge des Profils 30 erstrecken. Diese Längsnuten 32 dienen zur Befestigung etwaiger Anbauteile, wie beispielsweise eines Kotflügels, seitlicher Markierungsleuchten, seitlicher Schutzvorrichtungen, Schurrenhalterungen. Die Anbauteile können dadurch an beliebiger Position über die gesamte Länge des Fahrzeugaufbaus montiert sein.

Die Höhe des Profils H ist so gewählt, dass an der Profilseitenwand 33 eine reflektierende Markierung gemäß den gesetzlichen Vorgaben angebracht werden kann.

Das Profil 30 in seiner Länge und Position unabhängig vom Fahrgestell 11, auf das es aufgebaut wird. Es kann zum Beispiel direkt an den Trommellagerböcken 22 montiert werden. Dadurch wird der Vorplanungsaufwand erheblich gesenkt und durch die Vereinheitlichung der Längen können Versorgungsleitungen besser vorkonfektioniert werden.

Oben auf dem Profil ist zusätzlich eine weitere Befestigungsmöglichkeit geschaffen, indem sich an die Hohlkammern 31 seitlich jeweils wenigstens eine weitere Profilkammer 35 anschließt. Die Wandstärke der die Oberfläche der Profilkammern 35 bildende Wandung 36 ist stärker ausgeführt, um eine optimale Montagefläche für etwaige Bohrschrauben oder Blindnieten zur Befestigung von weiteren Anbauteilen zu formen. Als Montagehilfe ist hier eine Markierungsrille 37 vorgesehen, um Schäden oder Fehlmontagen zu vermeiden. Wie dies der Draufsicht in Figur 3 zu entnehmen ist, erstreckt sich die Längsrille 37 für jede Profilseite über die gesamte Profillänge. Exemplarisch sind hier zudem eingebrachte Bohrschrauben 38 oder Blindnieten 38 angedeutet.

Die verbleibende Profiloberfläche 39, insbesondere der die Hohlkammern 31 abdeckende Flächenbereich, ist ballig ausgeführt. Die Balligkeit verhindert die Ansammlung von Verschmutzungen und signalisiert dem Benutzer zudem, dass die ballig ausgeführte Oberfläche 39 nicht für die Montage von Anbauteilen genutzt werden soll, um Schädigungen der innerhalb der Kanäle 31 verlaufenden Versorgungsleitungen vorbeugen zu können.

Sehr häufig montieren Fahrer eigene Halter am Fahrzeug. Durch den integralen Geräteträger 30 wird die Möglichkeit geschaffen, dass diese zusätzlichen Halter verkehrssicher montiert werden können. Eine häufig gewünschte Option am Fahrmischer ist zudem eine Abdeckung im Fahrzeugrahmen, um die Trommel 21 gegen Spritzwasser und Schmutz von unten zu schützen. Bisher wird diese am Mischerhilfsrahmen befestigt, der individuell für jeden Anbau ist. Diese Abdeckung lässt sich nun ebenfalls an dem Profil 30 befestigen, wodurch auch hier kein individueller Planungsaufwand mehr entsteht.

Um Spannungen und Schäden in Haltern und Profil 30 durch unterschiedliche Wärmeausdehnung und Verformung des Profils 30 und der Stahlstruktur durch Belastung und Verwindung am Fahrgestell 11 zu vermeiden, kann die Aufhängung mittels gleitender Elemente ausgeführt werden. Geeignet sind beispielsweise Festlager und zumindest ein Loslager für die Montage des Profils 30.

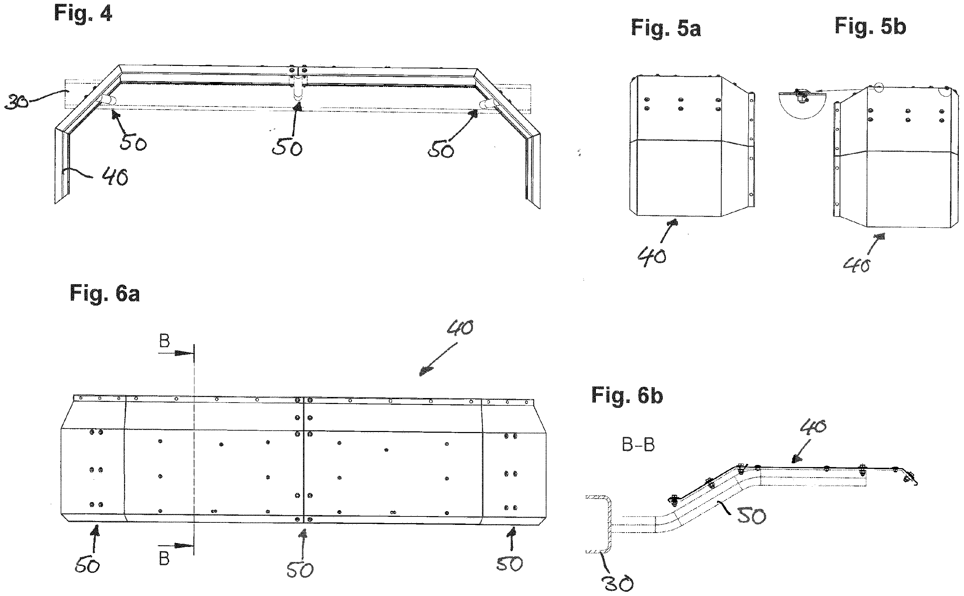

Figur 5 und 6 zeigen Darstellungen des Profils 30 mit seitlich montiertem Kotflügel 40, was mittels der drei in Fahrtrichtung zueinander versetzten Halter 50 erfolgt. Der Kotflügel 40 kann seitlich im Bereich der Profilkammern 35 mit der Profilwand verschraubt bzw. vernietet sein und/oder mit der Profiloberfläche 36 im Bereich der Profilkammer 35. Die Figuren 5a, 5b zeigen eine Vorder- und Rückansicht des Kotflügels, Figur 6a eine Draufsicht auf den Kotflügel und Figur 6B eine Schnittdarstellung entlang der Schnittachse B-B der Figur 6a. Ersichtlich ist hier der an der Unterseite des Kotflügels 40 verschraubte Halter. Die Ausgestaltung der Aufhängung in Verbindung mit dem Profil 30 gestattet eine verschiebliche und damit sehr flexible Montage der Kotflügel, insbesondere unabhängig von der Ausgestaltung des Fahrzeugrahmens 11 bzw. des Mischaufbaus 20.

Weiterhin ist der in Figur 1 gezeigte Staukasten 50 an dem Profil 30 montiert.

## Patentansprüche

1. Fahrmischer mit einem Fahrgestell (10) und einem Mischeraufbau (20), der die Mischtrommel (21) trägt, wobei wenigstens ein Profil (30) vorgesehen ist, das sich in Längsrichtung des Fahrmischers erstreckt und zur Aufnahme ein oder mehrerer Komponenten des Fahrmischers dient,
**dadurch gekennzeichnet,**
**dass** das Profil (30) ein oder mehrere Hohlkammern (31) zur Ausbildung ein oder mehrerer in Fahrzeuglängsrichtung verlaufender Kanäle für Versorgungsleitungen aufweist, wobei das Profil (30) ergänzend zu den die Kanäle bildenden Hohlkammer (31) wenigstens eine Profilkammer (35) mit verstärkter Kammerwandung (36) zur Aufnahme von Befestigungselementen aufweist und wobei die verstärkte Kammerwandung (36) mit wenigstens einer Markierung versehen ist, die die Montagestelle für ein oder mehrere Montageelemente kennzeichnet, wobei die Markierung vorzugsweise als in Profilrichtung verlaufende Rille (37) ausgestaltet ist.

2. Fahrmischer nach einem der vorhergehende Ansprüche, **dadurch gekennzeichnet, dass** die Versorgungsleitungen wenigstens eine Elektroleitung bzw. Signalleitung und/oder Wasserleitung und/oder Hydraulikleitung und/oder Pneumatikleitung umfasst.

3. Fahrmischer nach einem der vorhergehenden Ansprüche, **dadurch gekennzeichnet, dass** das Profil (30) am Fahrgestell (10) und/oder am Mischeraufbau (20) montiert ist.

4. Fahrmischer nach einem der vorhergehenden Ansprüche, **dadurch gekennzeichnet, dass** das Profil (30) ein oder mehrere Nuten (32), insbesondere Längsnuten, vorzugsweise auf der Profilunterseite umfasst, in die an beliebiger Position über die gesamte Länge der Nut, vorzugsweise des Profils (30), Anbauteile des Fahrmischers montierbar bzw. montiert sind.

5. Fahrmischer nach Anspruch 4, **dadurch gekennzeichnet, dass** es sich bei den Anbauteilen um einen Kotflügel (40) und/oder seitliche Markierungsleuchten und/oder seitliche Schutzvorrichtungen und/oder Schurrenhalterungen handelt.

6. Fahrmischer nach einem der vorhergehenden Ansprüche, **dadurch gekennzeichnet, dass** die Profiloberseite (39) eine gewölbte bzw. schräge Fläche aufweist.

7. Fahrmischer nach einem der vorhergehenden Ansprüche, **dadurch gekennzeichnet, dass** an wenigstens einer Seitenwand (33) des Profils (30) wenigstens eine retroreflektierende Markierung angebracht ist.

8. Fahrmischer nach einem der vorhergehenden Ansprüche, **dadurch gekennzeichnet, dass** das Profil (30) ein Aluminium-Stranpressprofil ist oder aus Stahl oder Kunststoff besteht bzw. Stahl und/oder Kunststoff umfasst.

9. Fahrmischer nach einem der vorhergehenden Ansprüche, **dadurch gekennzeichnet, dass** das Profil (30) über die gesamte Länge der Fahrwerks (11) oder nur einen Teil des Fahrwerks (11) verläuft oder mehrere Teilprofile in Längsrichtung angeordnet sind.

10. Fahrmischer nach einem der vorhergehenden Ansprüche, **dadurch gekennzeichnet, dass** das Profil (30) mit wenigstens einem Loslager und/oder Festlager am Fahrwerk (11) und/oder Mischeraufbau (20) montiert ist, um thermische Verwindungen und/oder Spannungen auszugleichen.

11. Fahrmischer nach einem der vorhergehenden Ansprüche, **dadurch gekennzeichnet, dass** pro Fahrzeugseite wenigstens ein Profil (30) vorgesehen ist.

12. Profil (30) für einen Fahrmischer, wobei das Profil (30) gemäß den Merkmalen eines der vorhergehenden Ansprüche ausgestaltet ist.

## Claims

1. A truck mixer with a chassis (10) and a mixer body (20) which carries the mixing drum (21), wherein at least one section (30) is provided, which extends in longitudinal direction of the truck mixer and serves to accommodate one or more components of the truck mixer,
**characterized in that**
the section (30) comprises one or more hollow chambers (31) for forming one or more channels for supply lines extending in longitudinal vehicle direction, wherein, in addition to the hollow chamber (31) forming the channels, the section (30) comprises at least one section chamber (35) with reinforced chamber wall (36) for accommodating fastening elements, and wherein the reinforced chamber wall (36) is provided with at least one marker which designates the mounting point for one or more mounting elements, wherein the marker preferably is designed as groove (37) extending in direction of the section.

2. The truck mixer according to any of the preceding claims, **characterized in that** the supply lines comprise at least one electric line or signal line and/or water line and/or hydraulic line and/or pneumatic line.

3. The truck mixer according to any of the preceding claims, **characterized in that** the section (30) is mounted on the chassis (10) and/or on the mixer body (20).

4. The truck mixer according to any of the preceding claims, **characterized in that** the section (30) comprises one or more grooves (32), in particular longitudinal grooves, preferably on the bottom side of the section, into which attachment parts of the truck mixer are mountable or mounted at any position along the entire length of the groove, preferably of the section (30).

5. The truck mixer according to claim 4, **characterized in that** the attachment parts are a fender (40) and/or lateral marker lights and/or lateral protectors and/or chute holders.

6. The truck mixer according to any of the preceding claims, **characterized in that** the section upper side (39) includes a curved or oblique surface.

7. The truck mixer according to any of the preceding claims, **characterized in that** on at least one side wall (33) of the section (30) at least one retroreflective marker is mounted.

8. The truck mixer according to any of the preceding claims, **characterized in that** the section (30) is an extruded aluminum section or consists of steel or plastics or comprises steel and/or plastics.

9. The truck mixer according to any of the preceding claims, **characterized in that** the section (30) extends along the entire length of the traveling gear (11) or only a part of the traveling gear (11) or several sub-sections are arranged in longitudinal direction.

10. The truck mixer according to any of the preceding claims, **characterized in that** the section (30) is mounted on the traveling gear (11) and/or mixer body (20) with at least one floating bearing and/or locating bearing, in order to compensate thermal distortions and/or stresses.

11. The truck mixer according to any of the preceding claims, **characterized in that** per vehicle side at least one section (30) is provided.

12. A section (30) for a truck mixer, wherein the section (30) is designed according to the features of any of the preceding claims.

## Revendications

1. Camion malaxeur avec un châssis (10) et une structure de malaxeur (20), qui supporte le tambour de malaxage (21), dans lequel est prévu au moins un profilé (30), qui s'étend dans le sens longitudinal du camion malaxeur et sert à recevoir un ou plusieurs composants du camion malaxeur,
**caractérisé en ce**
**que** le profilé (30) présente une ou plusieurs chambres creuses (31) servant à réaliser un ou plusieurs canaux s'étendant dans le sens longitudinal de véhicule pour des conduits d'alimentation, dans lequel le profilé (30) présente, en complément des chambres creuses (31) formant les canaux, au moins une chambre profilée (35) avec une paroi de chambre (36) renforcée servant à recevoir des éléments de fixation, et dans lequel la paroi de chambre (36) renforcée est pourvue d'au moins un marquage, qui marque l'emplacement de montage pour un ou plusieurs éléments de montage, dans lequel le marquage est configuré de préférence sous la forme d'une rainure (37) s'étendant dans le sens de profilé.

2. Camion malaxeur selon la revendication précédente, **caractérisé en ce que** les conduits d'alimentation comprennent au moins un conduit électrique ou un conduit de signaux et/ou un conduit d'eau et/ou un conduit hydraulique et/ou un conduit pneumatique.

3. Camion malaxeur selon l'une quelconque des revendications précédentes, **caractérisé en ce que** le profilé (30) est monté au niveau du châssis (10) et/ou au niveau de la structure de malaxeur (20).

4. Camion malaxeur selon l'une quelconque des revendications précédentes, **caractérisé en ce que** le profilé (30) comprend une ou plusieurs rainures (32), en particulier des rainures longitudinales, de préférence sur le côté inférieur de profil, dans lesquelles des composants rapportés du camion malaxeur peuvent être montés ou sont montés en une position quelconque sur la totalité de la longueur de la rainure, de préférence du profilé (30).

5. Camion malaxeur selon la revendication 4, **caractérisé en ce que** les composants rapportés sont un garde-boue (40) et/ou des lampes de marquage latérales et/ou des dispositifs de protection latéraux et/ou des fixations de goulottes.

6. Camion malaxeur selon l'une quelconque des revendications précédentes, **caractérisé en ce que** le côté supérieur de profilé (39) présente une surface bombée ou inclinée.

7. Camion malaxeur selon l'une quelconque des revendications précédentes, **caractérisé en ce qu'**au moins un marquage rétroréfléchissant est installé au niveau d'au moins une paroi latérale (33) du profilé (30).

8. Camion malaxeur selon l'une quelconque des revendications précédentes, **caractérisé en ce que** le profilé (30) est un profilé extrudé en aluminium ou est constitué d'acier ou de matière plastique ou comprend de l'acier et/ou de la matière plastique.

9. Camion malaxeur selon l'une quelconque des revendications précédentes, **caractérisé en ce que** le profilé (30) s'étend sur la totalité de la longueur du train de roulement (11) ou seulement sur une partie du train de roulement (11) et plusieurs profilés partiels sont disposés dans le sens longitudinal.

10. Camion malaxeur selon l'une quelconque des revendications précédentes, **caractérisé en ce que** le profilé (30) est monté avec au moins un palier lâche et/ou un palier fixe au niveau du train de roulement (11) et/ou de la structure de malaxeur (20), pour compenser des distorsions et/ou tensions thermiques.

11. Camion malaxeur selon l'une quelconque des revendications précédentes, **caractérisé en ce qu'**au moins un profilé (30) est prévu par côté de véhicule.

12. Profilé (30) pour un camion malaxeur, dans lequel le profilé (30) est configuré selon les caractéristiques d'une des revendications précédentes.
